# EUROPEAN PATENT SPECIFICATION

(11) **EP 4 068 585 B1**
(45) Date of publication and mention of the grant of the patent: **08.07.2026**
(21) Application number: 19953763.0
(22) Date of filing: 29.11.2019
(51) Int. Cl.: H02K 5/24, H02K 7/16, H02K 5/20, H02K 5/16, F16C 19/52, F16F 15/02

(54) **ROTARY ELECTRIC MACHINE WITH A BEARING ASSEMBLY COMPRISING A DETUNING DEVICE**
ROTATIONS-ELEKTROMASCHINE MIT LAGERBAUTEIL, DAS EINE VERSTIMMUNGSVORRICHTUNG UMFASST
MACHINE ÉLECTRIQUE ROTATIVE AVEC UN ENSEMBLE DE PALIER COMPRENANT UN DISPOSITIF DE DÉSACCORDEMENT

(43) Date of publication of application: 05.10.2022
(73) Proprietor: Weg Equipamentos Electricos S.A., 89256-900 Jaraguá do Sul (BR)
(72) Inventor: DE CARVALHO, Angelo Paulucci, 89270-000 Guaramirim (BR); CARDOSO, Fernando, 89275-000 Schroeder, SC (BR)
(74) Representative: Cabinet Beaumont
(86) International application number: PCT/BR2019/050511
(87) International publication number: WO 2021/102527

(56) References cited:
- EP-A1- 2 838 185
- BR-A- PI0 414 877
- DE-A1- 102012 221 542
- JP-B2- 5 885 896
- JP-B2- 6 002 102
- US-A1- 2012 098 358
- US-A1- 2012 299 421
- US-B2- 9 995 364

## Description

### FIELD OF THE INVENTION

The present invention relates to the field of rotary electric machines and, more specifically, to rotary electric machines of the type comprising bearing assemblies.

### BACKGROUND OF THE INVENTION

Rotary electric machines are equipment used for the transformation of electrical energy into mechanical, in the case of motors, and vice versa, in the case of generators. They consist of four basic structures, namely: the rotary energized component called rotor, a static element also energized called stator, bearings responsible for supporting the rotary component, and finally the casing that constitutes not only the role of enclosure of the systems already mentioned, but promotes integration with other auxiliary systems, such as excitation, ventilation, lubrication systems, among others that may coexist with the main ones.

The bearing assembly is the interface element between the rotary component and the static enclosure of a machine. In the case of rotary electric machines, the bearing assembly consists of the bearing itself, which can assume several constructive concepts, depending on the dynamic requirement of the machine. Some examples of the type of bearings applied to rotary electric machines are the self-lubricated rolling bearings, oil or grease lubricated, sliding bearings, hydrodynamic bearings, or magnetic bearings.

In addition to the bearing, the bearing assembly includes a cover, which has the function of an interface between the bearing and the casing, serving as a region for attachment of the first into the second, then transmitting the efforts suffered by the bearing to the structure of the rotary electric machine. Often, as a consequence of the main function, the cover has the secondary function of closing the end of the casing.

Other components may compose the bearing assembly, such as the mechanical seal that acts against oil leakage or water inlet into the bearing, vibration sensors, the piping for oil entry and exit for lubrication thereof, and as many other components as necessary.

In the case of the cover, it can have different geometries and be manufactured in various ways, such as boiled or casted.

During the design stage of a rotary electric machine, one of the evaluations that is performed concerns the analysis of the axial natural frequencies of the cover. This is necessary because often, due to the simplified geometry combined with the reduced plate thickness that forms the component, at least one of its axial natural frequencies tends to coincide with some of the excitation frequencies of the designed machine. Excitation frequencies are considered to be the frequency of the grid, the mechanical rotation frequency of the machine, or even one of its harmonics, for example.

When one of the axial frequencies of the bearing cover coincides with any of the excitation frequencies, the dynamic phenomenon of resonance occurs. This condition should always be avoided, because in structures with low damping, it often results in an increase in the vibration amplitude of the component beyond the values allowed by international standards that guide the design of rotary electric machines. When, still in the design stage, the possibility of occurrence of the resonance phenomenon is identified, it must be changed in order to move the axial natural frequency of the cover away from its corresponding resonance frequency.

Since the undamped natural frequency of a rigid body with only one degree of freedom is given by the relation between its rigidity and its mass, in simple terms, it is possible to change it by acting on these two magnitudes.

To this end, one of the changes made is related to the increase in the rigidity of the cover by introducing reinforcements or by increasing the thickness of the components that make up the cover. This action leads to an increase in its natural frequency and consequent detuning of the mode of interest. However, the increase in rigidity inevitably implies an increase in component costs, in addition to an increase in the mass of the assembly, which reduces the effects obtained by increasing rigidity.

Another possible change is the opposite of the first, that is, the reduction of the rigidity of the assembly carrying with it the reduction of its natural frequencies. However, this option can lead to structural problems, since the primary function of the cover is related to the support and transfer to the casing of the efforts felt by the bearing. Reducing the rigidity of the covers may then result in a component structurally unsuitable for the stresses in operation.

The two changes mentioned relate to the modification of the component rigidity as a measure for detuning the natural frequency of the cover in relation to the excitation frequency. However, another possible design change lies in the fact that the mass of the component is modified, that is, adding mass punctually in the region of maximum displacement relative to the mode in which it is desired to control without, however, increasing rigidity, which causes the natural frequency to fall without the assembly losing rigidity.

The use of mass points to change the natural frequency of a component is common in the state of the art, however, the simple addition of mass in the bearing cover component can result in a secondary problem in machines with reduced internal space, as in the case of turbogenerators. This is because the distances between the rotor and stator coil heads and the inner face of the casing and cover are reduced, thus the addition of any component in this region tends to strangle the airflow path for ventilation, increasing the temperature of the coil and thus decreasing the thermal efficiency of the machine.

In the case of turbogenerators for generating large amounts of power, as the components have considerable dimensions, the amount of mass to be added in the region of the cover tends to be significant. As a result, the mass point is equally voluminous, further restricting the passage area of the ventilation flow.

There are other technologically more complex alternatives to avoid the resonance phenomenon or mitigate its effects, such as the use of so-called dynamic neutralizers, which can be active or passive, or even the use of vibration isolators. However, these solutions are, in general, more expensive than the previous solutions, making their use unfeasible in most cases.

Document US 2012/299421 discloses a technical solution which applies a third bearing to allow the operation of an electrodynamic engine at a larger maximum rotational speed of the shaft. The electrodynamic engine has a rotatable supported shaft and first and second axial main bearings, spaced from one another, which facilitate the rotation of the shaft. A third bearing is provided which is designed to at least absorb radial forces created by the shaft.

### OBJECTIVES OF THE INVENTION

One of the objectives of the invention is to provide a detuning means of one of the axial natural frequencies of the bearing cover of a rotary electric machine.

A further objective of the invention is to provide a means of punctual addition of mass to the bearing cover of a rotary electric machine so as to reduce its axial natural frequency.

A further objective of the invention is to provide a shape for the detuning means that accompanies the flow of air within the rotary electric machine, without generating bottleneck regions thereof.

It is still an objective of the invention to provide a detuning means which manufacture and assembly are simple and economically advantageous.

It is yet another of the objectives of the invention to provide a detuning means which shape is modular.

### BRIEF DESCRIPTION OF THE INVENTION

The present invention achieves the above objectives by means of a rotary electric machine of the type comprising a casing housing an active core with a rotor and a stator, the machine comprising at least one bearing assembly with a bearing and a cover, wherein the bearing assembly further comprises a detuning device having a decreasing radial dimension in a direction from the cover to the inside of the machine. The detuning device comprises a plurality of segments of upper and lower plates stacked consecutively and staggered, the plurality of segments of upper plates comprising at least one interface segment with the cover and a sub-plurality of segments of decreasing radial dimension, wherein the segment closest to the interface segment has a radial dimension greater than the radial dimension of the segment furthest away from the interface segment.

In one embodiment of the invention, the detuning device is mounted in an internal region of the machine, in a portion comprised between the bearing assembly cover and a stator coil head.

The plurality of consecutively stacked and staggered plate segments are rigidly attached to the bearing assembly.

The plate segments may be manufactured from carbon steel plates.

### BRIEF DESCRIPTION OF THE DRAWINGS

The present invention will be described in more detail below, with references to the accompanying drawings, in which:
**Figure 1** - is a perspective view of a rotary electric machine according to the present invention, the machine being illustrated with the upper part sectioned for the visualization of its internal part;
**Figure 2** - is a perspective view of a bearing assembly of a rotary electric machine;
**Figure 3** - is a perspective view of a bearing assembly according to an embodiment of the present invention;
**Figure 4** - is an exploded perspective view of a bearing assembly according to an embodiment of the present invention;
**Figure 5** - is a front view of a bearing assembly according to an embodiment of the present invention;
**Figure 6** - is a lateral view of a bearing assembly according to an embodiment of the present invention;
**Figure 7** - is an exploded perspective view of a detuning device according to an embodiment of the present invention;
**Figure 8** - is a lateral view of a rotary electric machine according to the present invention, the machine being illustrated with the upper part sectioned for the visualization of its internal part; and
**Figure 9** - is an enlarged view of detail A shown in Figure 8.

### DETAILED DESCRIPTION OF THE INVENTION

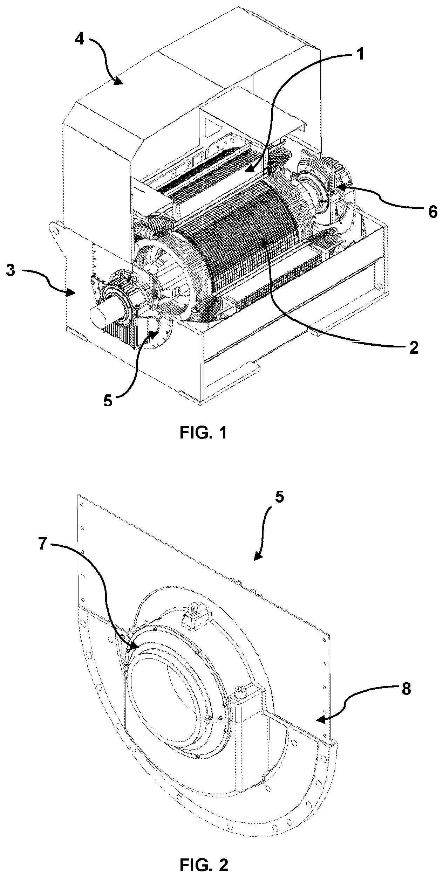

The present invention will be described below based on embodiments shown in figures 1 to 9.

Figures 1 and 2 show a rotary electric machine comprising a stator (1) magnetically coupled to a rotor (2). The stator (1) is attached to a casing (3) which may, depending on the ventilation circuit of the machine, present or not a heat exchanger (4). The rotor (2) is mounted on front (5) and rear (6) bearing assemblies which primary function is to support the loads imposed either by the rotor (2) of the rotary electric machine itself, as part of the load exerted by the driving machine (in the case of generators) or driven (in the case of motors).

The machine shown in figure 1 presents two bearing assemblies, one front (5) and one rear (6). However, as known to those skilled in the art, the rotary electric machine according to the present invention could have different constructive configurations in relation to the number of bearings, using, for example, only one front bearing assembly or even three bearings being one front and two rear. Although the present disclosure is made on the basis of an embodiment using two bearings (front (5) and rear (6)), one skilled in the art will understand that the solution of the present invention can be applied to the other mounting configurations without loss of generality.

Figure 2 illustrates the front bearing assembly (5) of the rotary electric machine. The assembly (5) comprises a bearing (7) which may be of the rolling, sliding or hydrodynamic type. In the exemplary configuration shown, the bearing (7) is of the hydrodynamic type. However, the solution of the present invention may also be applied to the other bearing types without loss of generality.

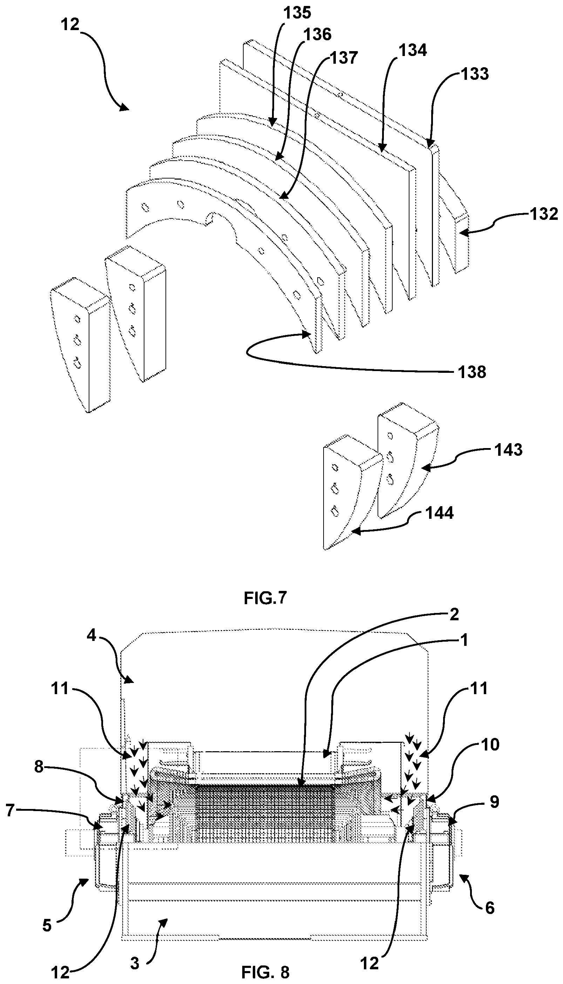

In addition to the bearing (7), the front bearing assembly (5) is formed by a cover (8) that has two main functions: transmitting the load supported by the bearing (7) to the casing (3), and closing the ends of the casing (3). The rear bearing assembly (6) is analogous to the front bearing assembly (5), consisting of a bearing (9) and a cover (10) (see figure 8). Thus, although the present detailed description is carried out on the basis of the front bearing assembly (5), the solution of the present invention is equally applied to the rear bearing assembly (6).

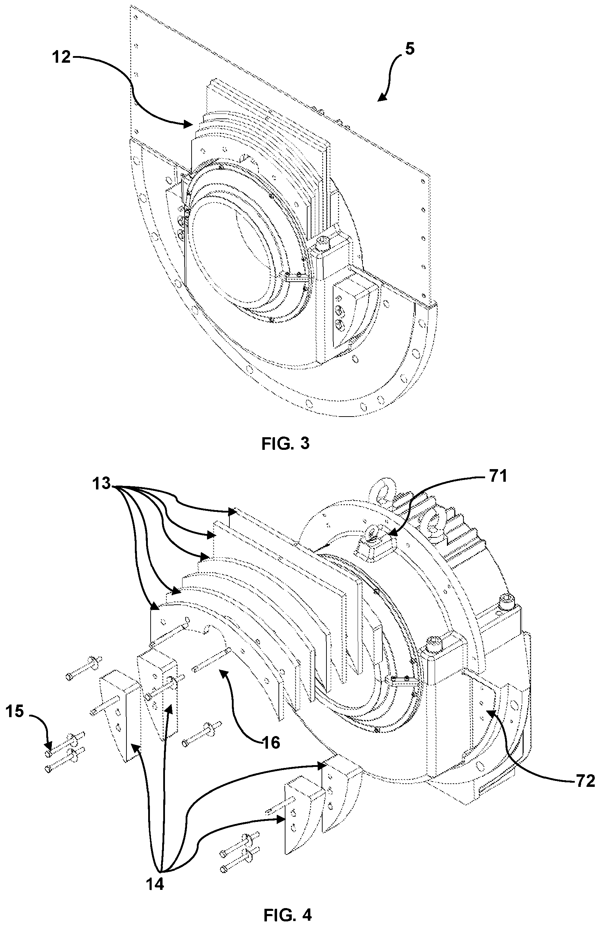

As best illustrated in figures 3 to 6, the machine according to the present invention comprises a detuning device of the axial natural frequency (12).

In the embodiment of the invention illustrated in the figures, the detuning device (12) is attached next to the bearing (7). However, the device (12) could be attached to the cover (8) depending on the configuration of the bearing assembly (5). The factors that influence the decision as to the fastening component of the detuning device (12) take into account the mode in which it is desired to control, and the geometry of the bearing assembly (5). For the embodiment shown in the figures, the mode of the cover (8) to be controlled presents maximum displacement in its central region, a region which is occupied by the bearing (7), thus, in order to obtain the best control, that is, to add the least amount of mass possible, the detuning device (12) must be attached to the bearing (7) itself.

The detuning device (12) has a construction such that it allows its installation between the rotor coil (2) and stator (1) heads and the inner face of the casing (3) and cover (8), without interfering with the airflow path (11) for ventilation. Thus, preferably, the detuning device (12) has a decreasing radial dimension in the region of the downward airflow path. That is, the detuning device (12) has a radial dimension that decreases in the direction from the cover (8) to the inside of the machine.

The radial dimension is taken with respect to the axis of rotation of the rotor (2) and corresponds to the direction of the radius of a circumference drawn by any point on the outer surface of the rotor (2) during its rotational movement.

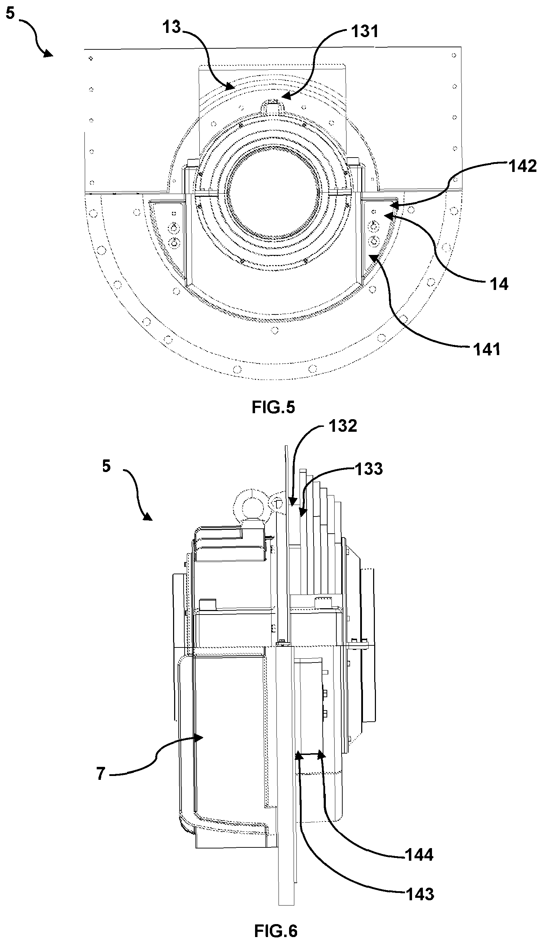

Thus, in a preferred embodiment of the invention, the detuning device (12) comprises a plurality of plate segments (13, 14) stacked consecutively and staggered. As best illustrated in figures 6 and 7, the device (12) comprises an interface segment (132) with the cover (8) and a sub-plurality of staggered segments wherein the segment (133) closest to the interface segment (132) with the cover (8) has a radial dimension greater than the radial dimension of the segment (138) furthest away from the cover (8).

In the embodiment of the invention shown in figures 3 to 6, the detuning device (12) comprises a plurality of upper (13) and lower (14) segments grouped and rigidly attached to the bearing (7) of the bearing assembly (5). The union can be made by means of a screwed union (15, 16), as shown in figure 4. The attachment of the detuning device (12) may further be accomplished by interfering pins, welding, or any other rigid form of union.

The mass segments (13, 14) can be attached to the bearing assembly (5) both in the axial direction with respect to the axis of rotation of the rotor (2), as shown in figure 4, and in the transverse direction thereto. The choice for one or the other form of attachment is based on the combination between the mass required for detuning the frequency in question and the volume available for assembly of the mass segments (13, 14), and also the possibility of drilling in one or the other direction.

The segments (13, 14) are, in a preferred embodiment, cut out of carbon steel plates which geometry has a shape suitable for the application. That is, the shape of the segments (13, 14) is such that it follows the shape of the bearing (7) chosen for the application. Thus, in one possible embodiment, shown in detail in figures 4 and 5, there is in the mass segment (13) a recess in the lower region (131), where a shoulder (71) is located for the attachment of the lifting eyebolt on the upper portion of the bearing (7). The same occurs in the regions (141, 142) of the lower segment (14), which has a "negative" shape in relation to the bearing (7) in its lower portion (72). Thus, it is understood that the shape of the segments (13, 14) is a "negative" of the shape of the bearing (7) or region of the bearing assembly (5) to which the segments will be applied.

The mass segments (13, 14), as already mentioned, in a preferred embodiment are manufactured from carbon steel plates due to the high availability of the material in companies that manufacture this type of equipment. In addition, carbon steel plates have a reduced cost associated with both raw material and transformation, and cutting processes such as laser or oxyacetylene cutting can be used to obtain the desired shape for the segments (13, 14). However, it is obvious to a person skilled in the art that the choice of materials with higher associated density, such as lead, copper, brass or tungsten, has a beneficial technical effect in relation to the size of the component.

The total mass required to achieve the desired natural frequency is obtained by consecutively stacking a predetermined number of segments (13, 14) that may be arranged in only one region of the bearing (7), or divided into as many regions as is convenient respecting the geometry of the bearing (7), as shown in figures 4 and 6, where the segments are divided into upper (13) and lower (14) segments, which are further symmetrically divided into both sides of the bearing (7). The division will be such that, preferably, it promotes the best efficiency of the solution, that is, it results in a detuning device (12) with the largest area and the smallest total thickness possible, in order to minimize the influence on the airflow (11) inside the rotary electric machine.

Still, the mass segments (13, 14) may exhibit different thicknesses when compared, as shown in figures 4 and 6, where the upper mass segments (13) exhibit a greater thickness in the interface segment (132) with the cover (8) when compared to the segments furthest away from the cover. The same occurs in the lower segments (14) that also have different thicknesses between the segment (143) closest to the cover (8) and the outermost (144). However, this thickness variation is not mandatory, that is, the geometry of the bearing (7) as well as the arrangement of the stagger in the segments (13, 14) will imply the use or not of different plate thicknesses in the different segments (13, 14).

Figure 7 shows in detail the different shapes that the upper mass segments (13) can have. The segments (133, 134) have a simplified shape when compared to the segments (135, 136, 137, 138), this is because the plates closest to the bearing cover (8) influence less in the airflow (11), and may have a shape that promotes the largest possible area, and consequently greater associated mass, thus reducing the total thickness of the detuning device (12) .

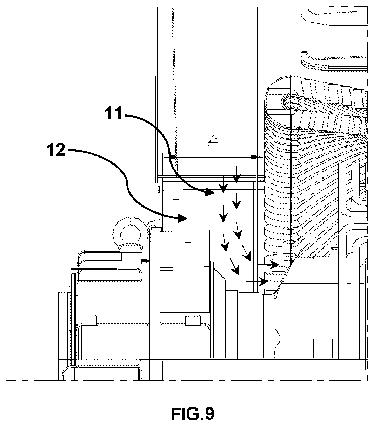

As best illustrated in figures 8 and 9, the upper mass segments (13) must be arranged in such a way as to accompany the airflow (11) of the ventilation circuit of the machine in question without, therefore, introducing barriers or obstacles to the preferred flow path, nor generating bottleneck regions thereof. Thus, the upper mass segments (13) will have a larger outer dimension the closer to the bearing cover (8) and their outer dimension will be reduced towards the inside of the machine. In a preferred embodiment a staggered shape is used, but the ramp shape or any variation can be applied without loss of technical effect.

The number of plates, as well as the inclination of the stagger, depend on: 1) the amount of mass required by the assembly for detuning the mode of interest; 2) the ventilation circuit of the machine; and 3) the distance A between the cover (8) and the stator coil head (1).

The lower mass segments (14), as they are outside the region covered by the airflow (11), do not require the adoption of a staggered format like the upper mass segments (13). Therefore, the number of lower segments (14) is considerably less than the number of upper segments (13) to achieve the same total thickness, because the number of lower segments (14) can be dependent only on the availability of the thickness of the raw material, or due to limitations of the cutting process adopted.

Since the detuning device (12) is composed of the assembly of several stacked segments (13, 14), and these have in essence a geometry in a "negative" shape to the bearing (7), it can be inferred that a tuned adjustment of the frequency of detuning can be carried out by assembling or disassembling one or more segments (13, 14) of the device (12), thus configuring modularity to the assembly.

Thus, the modularity of the detuning device (12) allows the adaptation of the device to different operating requirements, giving greater usability and flexibility to the use of the device.

The mass assembly (12) should preferably be arranged and fixed in the internal region of the machine so as not to compromise the maintenance of the equipment, as well as its perfect operation, since, for example, in the external region of sliding bearings, such as that presented in the current embodiment, the inlet and outlet for the oil piping, the fins for cooling the bearing, lifting eyebolts, vibration sensors and others are found. On the contrary, the internal region traditionally does not accommodate any accessory or restriction to use other than the influence on the ventilation airflow of the machine. Still, the positioning in the internal region promotes an additional advantage of not affecting the aesthetic aspect of the final product.

As examples of preferred embodiments of the present invention have been described, it should be understood that the scope of the present invention encompasses other possible variations of the inventive concept described as far as they do not depart from the scope of the invention, which is defined by the appended claims.

## Claims

1. A rotary electric machine of the type comprising a casing (3) housing an active core with a rotor (2) and a stator (1), the machine comprising at least one bearing assembly (5, 6) comprising a bearing (7, 9) and a cover (8, 10), the bearing assembly (5, 6) further comprising a detuning device (12) having a decreasing radial dimension in a direction from the cover to the inside of the machine, **characterized in that** the detuning device (12) comprises a plurality of segments of upper and lower plates (13, 14) stacked consecutively and staggered, the plurality of segments of upper plates (13) comprising at least one interface segment (132) with the cover and a sub-plurality of segments of decreasing radial dimension, wherein the segment (133) closest to the interface segment (132) has a radial dimension greater than the radial dimension of the segment (138) furthest away from the interface segment (132).

2. The rotary electric machine according to claim 1, **characterized in that** the detuning device (12) is mounted in an internal region of the machine, in a portion comprised between the cover (8, 10) of the bearing assembly (5, 6) and a stator coil head (1) and rotor (2).

3. The rotary electric machine according to claim 1 or 2, **characterized in that** the plurality of plate segments (13, 14) are rigidly attached to the bearing assembly (5).

4. The rotary electric machine according to any of claims 1 to 3, **characterized in that** the plate segments (13, 14) are manufactured from carbon steel plates.

## Patentansprüche

1. Rotierende elektrische Maschine des Typs, der ein Gehäuse (3) aufweist, das einen aktiven Kern mit einem Rotor (2) und einem Stator (1) beherbergt, wobei die Maschine wenigstens eine Lageranordnung (5, 6) aufweist, die ein Lager (7, 9) und einen Deckel (8, 10) aufweist, wobei die Lageranordnung (5, 6) ferner eine Verstimmungs-Einrichtung (12) aufweist, die eine in einer Richtung von dem Deckel zu dem Inneren der Maschine abnehmende radiale Abmessung hat,
**dadurch gekennzeichnet, dass** die Verstimmungs-Einrichtung (12) eine Vielzahl von Segmenten aus oberen und unteren Platten (13, 14) aufweist, die aufeinanderfolgend gestapelt und versetzt sind, wobei die Vielzahl von Segmenten aus oberen Platten (13) wenigstens ein Schnittstellensegment (132) mit dem Deckel und eine Untermenge von Segmenten mit abnehmender radialer Abmessung aufweist, wobei das Segment (133), das dem Schnittstellensegment (132) am nächsten liegt, eine radiale Abmessung hat, die größer ist als die radiale Abmessung des Segments (138), das am weitesten von dem Schnittstellensegment (132) entfernt ist.

2. Die rotierende elektrische Maschine nach Anspruch 1,
**dadurch gekennzeichnet, dass** die Verstimmungs-Einrichtung (12) in einem inneren Bereich der Maschine montiert ist, in einem Abschnitt, der zwischen dem Deckel (8, 10) der Lageranordnung (5, 6) und einem Statorspulenkopf (1) und Rotor (2) liegt.

3. Die rotierende elektrische Maschine nach Anspruch 1 oder 2,
**dadurch gekennzeichnet, dass** die Vielzahl von Plattensegmenten (13, 14) starr an der Lageranordnung (5) befestigt ist.

4. Rotierende elektrische Maschine nach einem der Ansprüche 1 bis 3,
**dadurch gekennzeichnet, dass** die Plattensegmente (13, 14) aus Kohlenstoffstahlplatten hergestellt sind.

## Revendications

1. Machine électrique rotative du type comprenant un boîtier (3) accueillant un noyau actif avec un rotor (2) et un stator (1), la machine comprenant au moins un ensemble de palier (5, 6) comprenant un palier (7, 9) et un couvercle (8, 10), l'ensemble de palier (5, 6) comprenant en outre un dispositif de désaccord (12) ayant une dimension radiale décroissante dans une direction allant du couvercle vers l'intérieur de la machine, **caractérisée en ce que** le dispositif de désaccord (12) comprend une pluralité de segments de plaques supérieures et inférieures (13, 14) empilés consécutivement et décalés, la pluralité de segments de plaques supérieures (13) comprenant au moins un segment d'interface (132) avec le couvercle et une sous-pluralité de segments de dimension radiale décroissante, dans laquelle le segment (133) le plus proche du segment d'interface (132) a une dimension radiale supérieure à la dimension radiale du segment (138) le plus éloigné du segment d'interface (132).

2. Machine électrique rotative selon la revendication 1, **caractérisée en ce que** le dispositif de désaccord (12) est monté dans une région interne de la machine, dans une partie comprise entre le couvercle (8, 10) de l'ensemble de palier (5, 6) et une tête de bobine de stator (1) et un rotor (2).

3. Machine électrique rotative selon la revendication 1 ou 2, **caractérisée en ce que** la pluralité de segments de plaque (13, 14) sont fixés rigidement à l'ensemble de palier (5).

4. Machine électrique rotative selon l'une quelconque des revendications 1 à 3, **caractérisée en ce que** les segments de plaque (13, 14) sont fabriqués à partir de plaques d'acier au carbone.
